(19) Europäisches Patentamt
European Patent Office
Office européen des brevets

(11) **EP 3 407 267 A1**

(12) **EUROPEAN PATENT APPLICATION**

(43) Date of publication:
**28.11.2018 Bulletin 2018/48**

(51) Int Cl.:
**G06N 3/04** (2006.01)   **G06N 3/08** (2006.01)
**G05B 23/02** (2006.01)

(21) Application number: **18157364.3**

(22) Date of filing: **19.02.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **25.05.2017   US 201715605023**

(71) Applicant: **Hitachi, Ltd.**
**Chiyoda-ku**
**Tokyo 100-8280 (JP)**

(72) Inventors:
• **GHOSH, Dipanjan**
  **Santa Clara, CA 95054 (US)**
• **RISTOVSKI, Kosta**
  **Santa Clara, CA 95054 (US)**
• **GUPTA, Chetan**
  **Santa Clara, CA 95054 (US)**
• **FARAHAT, Ahmed**
  **Santa Clara, CA 95054 (US)**

(74) Representative: **Strehl Schübel-Hopf & Partner**
**Maximilianstrasse 54**
**80538 München (DE)**

(54) **DEEP LEARNING NETWORK ARCHITECTURE OPTIMIZATION FOR UNCERTAINTY ESTIMATION IN REGRESSION**

(57)    Equipment uptime is getting increasingly important across different industries which seek for new ways of increasing equipment availability. Detecting faults in the system by condition based maintenance (CBM) is not enough, because at the time of fault occurrence, the spare parts might not available or the needed resources (maintainers) are busy. Therefore, prediction failures and estimation of remaining useful life can be necessary. Moreover, not only predictions but also uncertainty in the predictions is critical for decision making. Example implementations described herein are directed to tuning parameters of deep learning network architecture by developing a mechanism to optimize for accuracy and uncertainty simultaneously, thereby achieving better asset availability, maintenance planning and decision making.

FIG. 1

## Description

## BACKGROUND

Field

The present disclosure is generally directed to apparatus and data management, and more specifically, through optimization of deep learning network architectures for uncertainty estimation.

## Related Art

In the related art, equipment uptime has become increasingly important across difference industries which seek for new ways of increasing equipment availability. From the use of predictive maintenance, one can increase equipment availability, improve the safety of operators, and reduce the environmental incidents. Detecting faults in the system by condition based maintenance (CBM) may be insufficient, because at the time of fault occurrence, the spare parts may be unavailable or the needed resources (e.g., maintainers) may be busy.

Therefore algorithmic failure prediction and remaining useful life estimators have been developed. The predictors/estimators model the degradation process and predict failure time of the component or the time when component performance is below operational requirements. The degradation process of components in a complex system can be affected by many factors, such as undefined fault modes, operational conditions, environmental conditions, and so on. In some cases, such factors are not recorded and thus are considered unknown.

Prediction of failures or estimates of the remaining useful life are inherently uncertain. There can be various sources of uncertainty such as measurement noise, choice of predictive models and their complexity, and so on. Understanding uncertainty can be needed for understanding the utility of the data or a model. For example, based on the estimated uncertainty it is possible to provide confidence bounds on prediction values, Depending on predicted values and uncertainty (or confidence bounds) a decision maker can be more (large confidence bounds) or less careful (low confidence bounds) when taking the predictions into the decision making process.

In the case of high uncertainty, the decision maker can decide if more diverse data is necessary or if new machine learning models are needed for prediction. For example, uncertainty estimation is important when estimating remaining useful life (RUL) of critical equipment such as jet engines. The reliability team would likely schedule maintenance of the plane to meet the time when the lower bound of RUL confidence interval occurs. By doing this, catastrophic failure during operations can be avoided. Another example of importance of uncertainty estimates is operational planning, which involves multiple pieces of equipment performing different activities.

Knowing the uncertainty along with predictions for durations of different activities could lead to more confident planning in terms of the final production outcome compared to the approach of taking just predictions alone. Quantifying uncertainty also facilitates better cost optimizations.

In related art implementations for failure prediction, and RUL estimation, time sequence information is taken into consideration through sliding windows, recurrent neural networks, Convolutional Neural Networks (CNN) and Long Short Term Memory (LSTM) networks. Thus, information processing ranges from independent time windows for sliding window implementations, to sequence dependent time windows for recurrent neural network and LSTM implementations. However, none of these approaches provide any uncertainty estimate for the predictions made.

Generally in deep learning, uncertainty quantification has been an area of active research in the related art. A particular related art technique called "dropout" is regularly used in deep learning during the training phase as a model regularization technique. Related art implementations have demonstrated that dropout can be useful to provide uncertainty information at inference phase using a technique called Monte Carlo (MC) dropout. The amount of dropout is critical to accuracy and uncertainty estimates and selection of optimum dropout and network architecture is an important step. Currently, the dropout that gives best accuracy result in the validation phase is considered as the optimum for the inference phase.

However, related art implementations of robust optimization have shown that when uncertainty and accuracy both are considered, then it is a trade-off problem and thus both should be optimized simultaneously. In the related art implementations in MC dropout, focus is only on the accuracy and dropout is used to provide uncertainty information, and accuracy and uncertainty are not optimized simultaneously.

## SUMMARY

Example implementations described herein involve a mechanism with foundation in deep learning for tuning parameters of a deep learning network to optimize for accuracy and uncertainty simultaneously. The optimized network will provide prediction values as well as associated uncertainty in the prediction. Based on the foundations of MC dropout, deep learning and optimization in general, example implementations involve a technique along with a fitness function to be optimized that focuses on prediction accuracy and uncertainty simultaneously.

Example implementations are directed to addressing the problem of accurately predicting failures or Remaining Useful Life (RUL) while providing accurate information related to uncertainty in the prediction using time sequence sensor data, failure data and operational data. Such example implementations involve optimizing network parameters for accuracy and uncertainty simultaneously.

Example implementations directed herein involve a dynamic network creation of deep learning architecture. In example implementations, the base architecture stack-up defines the network layer types which are included in the model and the relationship between them. The base architecture stack-up is problem specific and it is assumed to be specified by the user. The base architecture can involve layer types such as Convolutional Neural Network (CNN), Long Short Term Memory (LSTM), and multi-layer fully connected neural network (NN).

In example implementations, the network architecture is created based on input network architecture parameters and base architecture stack-up. Network architecture parameters include, but are not limited to, the number of convolutional layers, number of convolutional filters in each layer, number of LSTM layers, number of LSTM units in each layer, number of fully connected layers, number of hidden units in each fully connected hidden layer, dropout rate (CNN layers, LSTM layers, fully connected layers), training optimization algorithm, training optimization algorithm learning rate, objective function for training, and so on.

Example implementations can also involve a fitness function to evaluate prediction accuracy and uncertainty simultaneously of the network architecture and related parameters under consideration. In example implementations, the fitness function is evaluated on validation dataset and it is used by optimization algorithm to find the optimum network architecture.

Example implementations can also involve an automated optimum network architecture selection and network training, which is a coupling dynamic network architecture creation with an optimization algorithm. The coupling of the dynamic network architecture with an optimization algorithm finds optimum network architecture parameters through dynamically creating and training a deep learning network, using trained deep learning network to evaluate fitness function on validation dataset, optimizing for the fitness function with respect to network architecture parameters, and conducting RUL prediction along with uncertainty through using multiple components.

Aspects of the present disclosure can include a method, which involves a) initializing deep learning architecture parameters for a pre-defined base architecture; b) conducting model training based on the deep learning architecture parameters to generate a trained model; c) obtaining predictions and uncertainties through iteratively applying Monte Carlo (MC) dropout trained model to evaluate the fitness function, wherein the fitness function is configured to evaluate accuracy and uncertainty of the predictions of the training model; d) for the fitness function indicative of the trained model not being optimized, updating the deep learning architecture parameters and repeating the method from step b); and e) for the fitness function indicative of the trained model being optimized, providing the trained model for prediction.

Aspects of the present disclosure can include an apparatus, which involves a processor configured to a) initialize deep learning architecture parameters for a pre-defined base architecture; b) conduct model training based on the deep learning architecture parameters to generate a trained model; c) obtain predictions and uncertainties through iteratively applying Monte Carlo (MC) dropout to the generated trained model to evaluate the fitness function, wherein the fitness function is configured to evaluate accuracy and uncertainty of the predictions of the training model; d) for the fitness function indicative of the trained model not being optimized, update the deep learning architecture parameters and repeating the method from step b); and e) for the fitness function indicative of the trained model being optimized, provide the trained model for prediction.

Aspects of the present disclosure can include a computer program, which involves instructions for a) initializing deep learning architecture parameters for a pre-defined base architecture; b) conducting model training based on the deep learning architecture parameters to generate a trained model; c) obtaining predictions and uncertainties through iteratively applying Monte Carlo (MC) dropout to the generated trained model to evaluate the fitness function, wherein the fitness function is configured to evaluate accuracy and uncertainty of the predictions of the training model; d) for the fitness function indicative of the trained model not being optimized, updating the deep learning architecture parameters and repeat the process from step b); and e) for the fitness function indicative of the trained model being optimized, providing the trained model for prediction. The computer program can be in the form of instructions stored on a non-transitory computer readable medium and executable by one or more processors.

**BRIEF DESCRIPTION OF DRAWINGS**

FIG. 1 illustrates an example flow, in accordance with an example implementation.

FIG. 2 illustrates a base architecture stack-up, in accordance with an example implementation.

FIG. 3 illustrates an example of the base architecture stack-up in the case of RUL estimation, in accordance with an example implementation.

FIG. 4 illustrates an example Monte Carlo dropout method and fitness function evaluation, in accordance with an example implementation.

FIG. 5 illustrates an example of a converged network architecture for RUL, in accordance with an example implementation.

FIG. 6 illustrates an example of architecture parameter initialization for an optimization algorithm, in accordance with an example implementation.

FIG. 7 illustrates an example of converged architecture parameters generated from the optimization algorithm, in accordance with an example implementation.

FIG. 8(a) illustrates a system involving a plurality of apparatuses and a management apparatus, in accordance with an example implementation.

FIG. 8(b) illustrates an example execution of a model for RUL, in accordance with an example implementation.

FIG. 9 illustrates an example computing environment with an example computer device suitable for use in some example implementations.

## DETAILED DESCRIPTION

The following detailed description provides further details of the figures and example implementations of the present application. Reference numerals and descriptions of redundant elements between figures are omitted for clarity. Terms used throughout the description are provided as examples and are not intended to be limiting. For example, the use of the term "automatic" may involve fully automatic or semi-automatic implementations involving user or administrator control over certain aspects of the implementation, depending on the desired implementation of one of ordinary skill in the art practicing implementations of the present application. Selection can be conducted by a user through a user interface or other input means, or can be implemented through a desired algorithm. "Uncertainty level" and "confidence level" may also be utilized interchangeably. Example implementations as described herein can be utilized either singularly or in combination and the functionality of the example implementations can be implemented through any means according to the desired implementations.

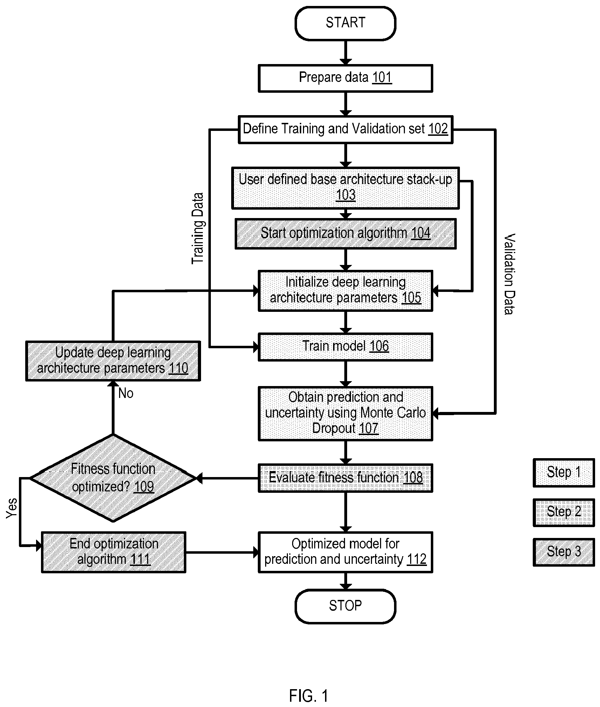

FIG. 1 illustrates an example flow, in accordance with an example implementation. Example implementations can involve three steps as shown in FIG. 1, such as dynamic deep learning network architecture creation and training (Step 1), fitness function evaluation on validation dataset (Step 2), and optimizing fitness function with respect to deep learning network architecture and network hyper-parameters (Step 3).

In an example implementation to demonstrate the working of the methodology, an example of a Remaining Useful Life (RUL) estimation of a system is utilized. RUL is the time remaining before the component of a system reaches end-of-life. Estimating RUL involves incorporating information from time sequence sensor data, event data, failure data and operational data. To accurately estimate RUL and along with the uncertainty using our methodology the following steps should be executed in the sequence presented.

Data preparation 101 involves data input for predictions. The data input for predictions is a set of time sequences generated from sensor measurements, sequence of operations and the events generated during the operations of the component/system which may be relevant to the problem. Several steps are necessary to perform before the data is used as an input to a deep learning algorithm. Example implementations leverage the data processing as previous contributions to the field of failure prediction, RUL estimation, and so on, based on sensors.

In an example, steps are conducted for data preparation 101 to determine RUL, such as outlier removal, and component based sequence construction to make data to be in a format consumable by deep learning. During sequence construction, it can be necessary to transform conventional time-scale to component time-scale as RUL should be expressed in operational time (e.g., it does not include non-operational time such as equipment downtimes, lunch breaks, and so on).

Additional steps for data preparation 101 can involve sensor data compression (feature extraction) by applying windows over the data using (a) predefined functions over the windows such as minimum, maximum, percentiles, average, FFT (Fast Fourier Transform), and so on, and (b) applying on Convolutional Neural Networks (CNNs) for automatic feature extraction. If automatic feature extraction using CNN is applied, then the same should be defined in the base architecture stack-up as described herein.

Additional steps for data preparation 101 can also involve the creation of labels for each element of created sequence with corresponding RUL value, depending on the desired implementation. This can be necessary for learning model parameters in the training phase.

Once the data is prepared, the data is further divided into a training set and a validation set at 102. The training set is used during the model training phase to learn model parameters, while the validation set is used for evaluating a fitness function as described below in the present disclosure.

Next, there is the execution of the dynamic deep learning network architecture creation and training. At this portion, the existing concepts in deep learning network architectures are utilized, which include convolutional neural networks (CNNs), LSTM networks and neural networks (NN). As the first step a user-defined base architecture stack-up is created at 103. The base architecture stack-up in example implementations is defined as the relationship between the convolutional layer, LSTM layer and NN layer. The base architecture stack-up can be defined by the user to include the if and where convolutional layers, LSTM layers and NN layers are implemented, which layers are connected to each other, and so on in accordance with the desired implementation.

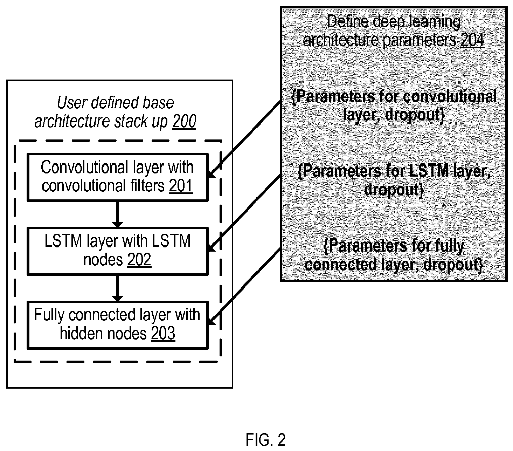

FIG. 2 illustrates a base architecture stack-up, in accordance with an example implementation. As illustrated in FIG. 2, the base architecture stack-up 200 in example implementations involves the relationship between the convolutional layers 201, LSTM layers 202 and NN layers 203 as defined by the user. The base architecture 200 involves many architectural parameters 204 for initialization. Such parameters include, but are not limited to, the number of convolutional layers, number of convolutional filters, convolutional filter size, number of LSTM layers, number of LSTM nodes, number of NN layers, number of NN hidden nodes, dropout rate, and so on, depending on the desired implementation. The architectural parameters are optimized using an optimization algorithm, henceforth referred to as the main optimization algorithm.

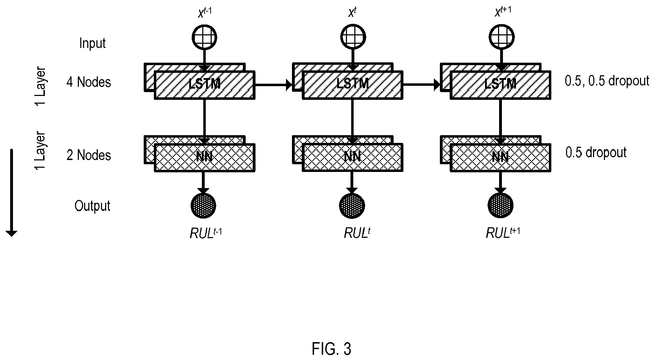

FIG. 3 illustrates an example of the base architecture stack-up in the case of RUL estimation, in accordance with an example implementation. As shown in FIG. 3 for RUL, the information flows from input layer to the LSTM layer, then to the NN layer and finally to the output layer. Such relationships can be user-defined. If an automatic feature extraction process is needed, then the base architecture stack-up relationship can involve the input layer to convolutional layer to LSTM layer to NN layer to the output layer. The main optimization algorithm finds the network architecture parameters keeping the user-defined base architecture unchanged.

Turning back to FIG. 1, at 104, the main optimization algorithm is started wherein architectural parameters are initialized at 105. Example implementations described herein involve the execution of an optimization algorithm, (i.e. the main optimization algorithm). The main optimization can be a gradient based or a gradient free algorithm such as an evolutionary algorithm, depending on the desired implementation. Once the base network architecture stack-up is defined as illustrated at 200 of FIG. 2, the main optimization algorithm initializes the network architecture parameters as illustrated in 204 of FIG. 2, and the deep learning network is dynamically created. By optimizing the fitness function (described below) the main optimization algorithm results in optimum network architecture. The main optimization algorithm does not alter the base architecture stack-up.

As an example, in the case of RUL estimation, as shown in FIG. 3 the main optimization initializes the network architecture parameters as 1 LSTM layer with 4 LSTM nodes, 1 NN layer with 2 hidden nodes, 0.5 input and output dropout for LSTM layer and 0.5 dropout for NN layer.

At 106, the model is then trained. After the base architecture stack-up definition and the network architecture parameter initialization by the main optimization algorithm, the model is trained using the training dataset as shown in FIG. 1. The hyper-parameters necessary for training the network, such as learning rate, number of epochs, and so on, are also determined by the main optimization algorithm. Once training is complete and the model converges, the trained model is used to evaluate the fitness function on the validation dataset as presented below.

At 107, the prediction and uncertainty are obtained through the use of MC dropout, whereupon the fitness function evaluation is executed at 108. In example implementations, accuracy and uncertainty are simultaneously optimized. Thus, example implementations involve a novel fitness function is developed that is evaluated using the validation dataset. As stated above, the related art shows that the MC dropout mechanism approximates a Gaussian distribution. Thus, example implementations involve a fitness function as follows:

The Gaussian distribution is represented as:

$$P(y|x, w, d) = \frac{1}{(\sqrt{2\pi})\sigma} \cdot e^{\frac{-1}{2} \cdot \frac{(y-\mu)^2}{\sigma^2}} \text{ where,}$$

$x$ = input data
$w$ = network parameters (e.g., deep learning architecture parameters)
$d$ = dropout rate
$\mu$ = mean of the prediction sampled using MC dropout mechanism
$\sigma$ = deviation of the prediction sampled using MC dropout mechanism
$P(y|x,w,d)$ = likelihood of predicting $y$ given input data $x$, network parameters (e.g., trained model provided from the deep learning architecture parameters) $w$ and dropout $d$.

The fitness function to be maximized is defined as log-likelihood on validation set $= \sum_{i=1}^{n} P(y_i|x, w, d)$, where $n$ is the number of data points in the validation dataset.

Evaluating the fitness function involves a two-step procedure. In the first step the trained model is used to estimate the predictions and uncertainty in the prediction using the validation dataset and the MC dropout method. In the current practice during the inference phase or prediction phase, the dropout is de-activated; however in this case of MC dropout it is kept activated to evaluate the predictions and related uncertainty that is ultimately used to evaluate the fitness function. This is explained using the RUL estimation example below.

For example in the case of RUL estimation on validation dataset, RUL is evaluated multiple number of times for the same instance (Monte Carlo samples), using the trained model and validation dataset by keeping dropout activated.

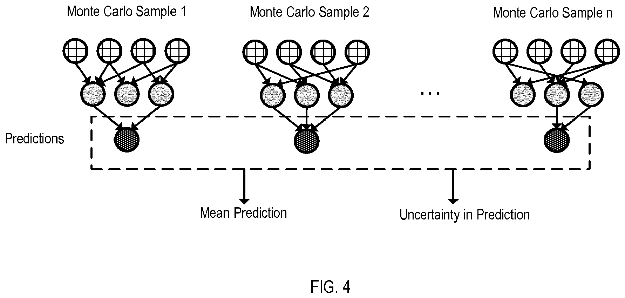

FIG. 4 illustrates an example MC dropout method and fitness function evaluation, in accordance with an example implementation. In an example, three instances of dropout are shown, where certain connections from the top layer to the middle layer are dropped randomly based on the dropout. Such instances that are equal to the number of Monte Carlo are created and executed using the trained model resulting in MC dropout. As illustrated in FIG. 4, the mean or average of the predictions represents the predicted RUL ($\mu$) in the fitness function presented above. The difference between the predicted RUL and the actual RUL ($y$) represents the accuracy of the model. Along-with the predicted RUL ($\mu$), the uncertainty ($\sigma$) is also calculated using the Monte Carlo predictions as shown in FIG. 4; that is the uncertainty is measured from the standard deviation of the generated predictions. Using the validation dataset, actual RUL (y), mean of predictions ($\mu$) and uncertainty ($\sigma$) are used to evaluate the fitness function presented above. The evaluated fitness function (being optimized by the main optimization algorithm) is further used to update the network architecture parameters by the main optimization algorithm as presented further below.

Turning back to FIG. 1, the fitness function optimization and network architecture parameter update process is executed at 109 and 110. The network created is trained and then is used to evaluate the fitness function on the validation data set. The main optimization algorithm then checks whether the fitness function has reached an optimum value (i.e., the algorithm reaches a convergence criterion) at 109. If not (No), the flow proceeds to 110 wherein the network architecture parameters (including dropout) are updated and the process of model training and fitness function evaluation is repeated at 105 until convergence in the main optimization algorithm is achieved. The network architecture parameter updates are based on the type of optimization algorithm being used (i.e., gradient based or gradient free methods). Such optimization methods and convergence methods can be implemented through use of any desired optimization algorithm, such as simulated annealing, gradient descent, and so on, and executed until the parameters of the deep learning architecture converge. Once the fitness function is optimized (i.e. main optimization algorithm converges), the resulting trained network model along with dropout is saved. The optimized network model will not only be highly accurate but will also provide meaningful uncertainty estimates in the predictions.

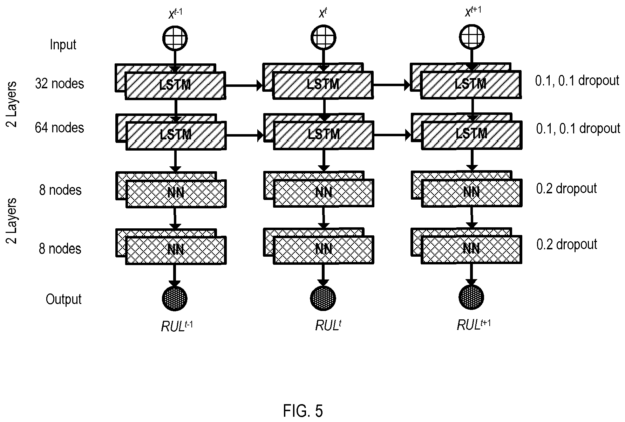

FIG. 5 illustrates an example of a converged network architecture for RUL, in accordance with an example implementation. As an example in the case of RUL, by following the flow of FIG. 1, the architecture initialized in FIG. 3 converges to the one shown in FIG. 5, where there are two LSTM layers and two NN layers. The LSTM layers have 32 nodes and 64 nodes respectively in layer 1 and 2, while 8 hidden nodes in each NN layer.

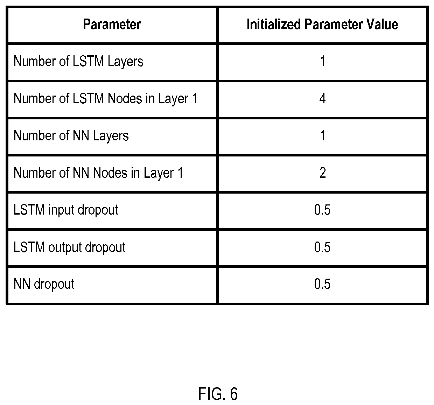

FIG. 6 illustrates an example of architecture parameter initialization for an optimization algorithm, in accordance with an example implementation. In the example of FIG. 6, the architecture parameter initialization for the optimization algorithm is provided for RUL. As illustrated in FIG. 6, parameters can include number of LSTM layers, number of LSTM Nodes in each layer, number of NN layers, number of NN nodes in each layer, the LSTM input dropout, the LSTM output dropout, and the NN dropout. The parameters are used as the user defined base architecture stack-up 103 for the optimization algorithm 104 as described in FIG. 1.

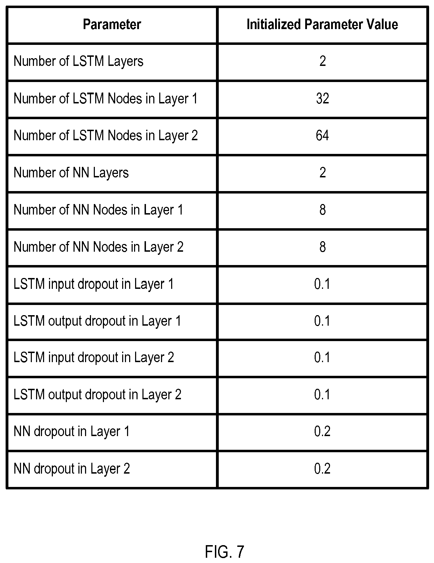

FIG. 7 illustrates an example of converged architecture parameters generated from the optimization algorithm, in accordance with an example implementation. In the example of FIG. 7, the architecture parameter convergence from the optimization algorithm is provided for RUL and is based on the input of the base architecture as illustrated in FIG. 6. Such parameters are eventually obtained from the convergence that is forced from execution the flow of FIG. 1. The converged parameters can include the number of LSTM layers, number of LSTM Nodes in each layer, number of NN layers, number of NN nodes in each layer, the LSTM input dropout, the LSTM output dropout, and the NN dropout as illustrated in FIG. 6, and expanded out or redacted based on the final determination of LSTM Layers and NN layers.

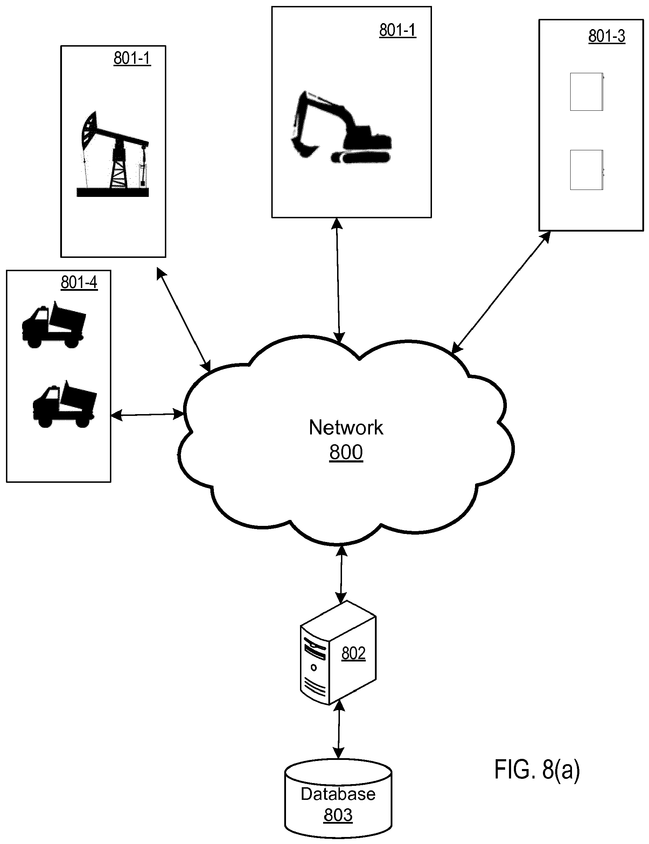

In an example implementation, the flow as illustrated in FIG. 1 can be utilized to generate an optimized model that provides predictions for desired parameters such as RUL, along with the confidence level of the predictions. An example of such a system that can utilize the flow as illustrated in FIG. 1 is provided in FIG. 8(a), which illustrates a system involving a plurality of apparatuses and a management apparatus, in accordance with an example implementation. One or more apparatuses or apparatus systems 801-1, 801-2, 801-3, and 801-4 are communicatively coupled to a network 800 which is connected to a management apparatus 802. The management apparatus 802 manages a database 803, which contains data feedback aggregated from the apparatuses and apparatus systems in the network 800. In alternate example implementations, the data feedback from the apparatuses and apparatus systems 801-1, 801-2, 801-3, and 801-4 can be aggregated to a central repository or central database such as proprietary databases that aggregate data from apparatus or apparatus systems such as enterprise resource planning systems, and the management apparatus 802 can access or retrieve the data from the central repository or central database. Such apparatuses can include stationary apparatuses such as coolers, air conditioners, servers, as well as mobile apparatuses such as automobiles, trucks, cranes, as well as any other apparatuses that undergo periodic maintenance.

In such an example implementation, the historical data that is provided in the database 803 can serve as a basis for training the model and generating an optimized model that provides prediction and an uncertainty level. For example, data stored in the database 803 from the desired apparatuses or types of apparatuses to be modeled are prepared through the execution of the flow at 101, whereupon a training and validation set is defined from the data at 102. The user defines a base architecture stack-up at 103 by defining the architecture as illustrated in FIG. 2. The architecture can include how and if convolutional layers are used, how and if they are fed to LSTM layers, and so on as illustrated in the example base architecture stackup 201 to 203 as illustrated in FIG. 2. The parameters provided as illustrated in FIG. 6 are used to initialize the deep learning architecture parameters at 105 to conduct model training at 106, based on the initialized parameters and the data stored in the database 803. Once the model is trained at 106, the data stored in the database 803 is utilized as a validation set to generate predictions and uncertainty levels through the use of MC dropout 107. Through the use of MC dropout, a set of predictions and associated uncertainty levels are generated, which are then used to evaluate the fitness function at 108. Based on the equation as disclosed at 108 for FIG. 1, the mean of the predictions and the associated deviation levels can be utilized to determine if the fitness function is optimized at 109. If the fitness function is optimized (Yes) then the flow proceeds to 111 to end the optimization algorithm, wherein the generated model is deployed onto management apparatus 802 to determine the RUL and the uncertainty level of the RUL predictions. Otherwise, the flow proceeds to 110 so that the network architecture parameters (including dropout) are updated and the process of model training and fitness function evaluation is repeated at 105 until convergence in the main optimization algorithm is achieved.

As illustrated in FIG. 8(a), example implementations can be utilized in applications which require prediction of failures, calculation of RUL, and other predictive maintenance activities for either components of the system or a system as a whole. The example implementations are also useful whether predictive algorithms are coupled with a decision making process or algorithm like end-to-end process optimization, and so on.

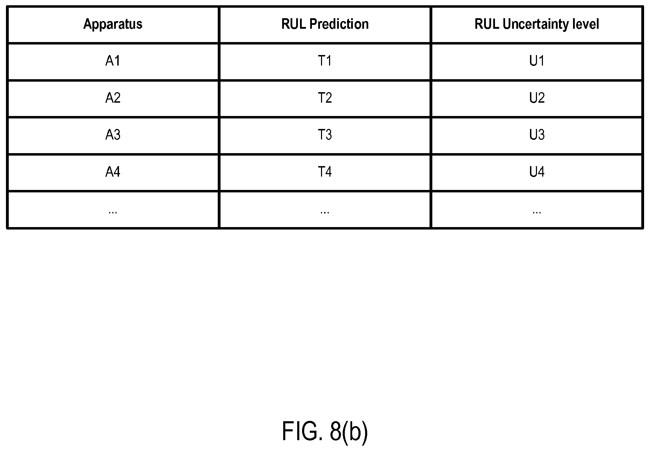

FIG. 8(b) illustrates an example execution of a model for RUL, in accordance with an example implementation. Specifically, FIG. 8(b) illustrates an example of RUL predictions and the uncertainty level of the RUL predictions for apparatuses that may be managed by a management apparatus as illustrated in FIG. 8(a). Through the execution of the model on each managed apparatus, the prediction of the RUL and the uncertainty level of the RUL prediction for each of the apparatuses can be obtained, whereupon the manager of the apparatus system can determine when to schedule maintenance for a particular apparatus and can determine how much weight is to be given for a prediction given the uncertainty level.

Although example implementations described herein are directed to RUL, the present disclosure is not limited thereto, and any parameter that requires a model for generation of a prediction and uncertainty level can be applied. Examples of other parameters that can be determined from the generated model can include, but are not limited to, estimated time of arrival for a vehicle, expected power consumption for a set of equipment, expected network traffic for data feedback from the apparatuses to the server, estimated cost of repairs for a month, and so on according to the desired implementation. As long as a historical dataset is provided in database 803 with the associated data of a desired parameter, the flow diagram as illustrated in FIG. 1 can be executed to generate a model that can provide predictions and uncertainty for a desired parameter.

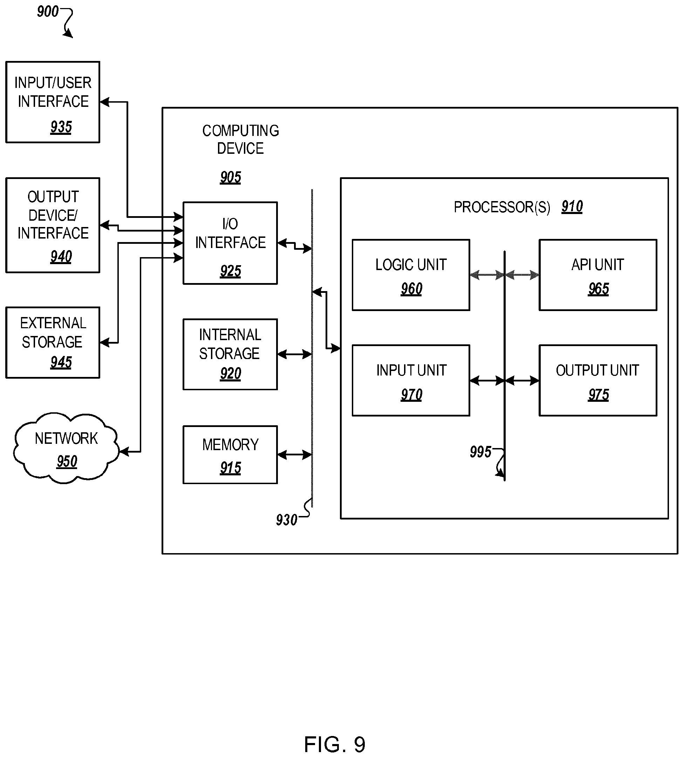

FIG. 9 illustrates an example computing environment with an example computer device suitable for use in some example implementations, such as a management apparatus 802 as illustrated in FIG. 8(a).

Computer device 905 in computing environment 900 can include one or more processing units, cores, or processors 910, memory 915 (e.g., RAM, ROM, and/or the like), internal storage 920 (e.g., magnetic, optical, solid state storage, and/or organic), and/or I/O interface 925, any of which can be coupled on a communication mechanism or bus 930 for communicating information or embedded in the computer device 905. I/O interface 925 is also configured to receive images from cameras or provide images to projectors or displays, depending on the desired implementation.

Computer device 905 can be communicatively coupled to input/user interface 935 and output device/interface 940. Either one or both of input/user interface 935 and output device/interface 940 can be a wired or wireless interface and can be detachable. Input/user interface 935 may include any device, component, sensor, or interface, physical or virtual, that can be used to provide input (e.g., buttons, touch-screen interface, keyboard, a pointing/cursor control, microphone, camera, braille, motion sensor, optical reader, and/or the like). Output device/interface 940 may include a display, television, monitor, printer, speaker, braille, or the like. In some example implementations, input/user interface 935 and output device/interface 940 can be embedded with or physically coupled to the computer device 905. In other example implementations, other computer devices may function as or provide the functions of input/user interface 935 and output device/interface 940 for a computer device 905.

Examples of computer device 905 may include, but are not limited to, highly mobile devices (e.g., smartphones, devices in vehicles and other machines, devices carried by humans and animals, and the like), mobile devices (e.g., tablets, notebooks, laptops, personal computers, portable televisions, radios, and the like), and devices not designed for mobility (e.g., desktop computers, other computers, information kiosks, televisions with one or more processors embedded therein and/or coupled thereto, radios, and the like).

Computer device 905 can be communicatively coupled (e.g., via I/O interface 925) to external storage 945 and network 950 for communicating with any number of networked components, devices, and systems, including one or more computer devices of the same or different configuration. Computer device 905 or any connected computer device can be functioning as, providing services of, or referred to as a server, client, thin server, general machine, special-purpose machine, or another label.

I/O interface 925 can include, but is not limited to, wired and/or wireless interfaces using any communication or I/O protocols or standards (e.g., Ethernet, 802.11x, Universal System Bus, WiMax, modem, a cellular network protocol, and the like) for communicating information to and/or from at least all the connected components, devices, and network in computing environment 900. Network 950 can be any network or combination of networks (e.g., the Internet, local area network, wide area network, a telephonic network, a cellular network, satellite network, and the like).

Computer device 905 can use and/or communicate using computer-usable or computer-readable media, including transitory media and non-transitory media. Transitory media include transmission media (e.g., metal cables, fiber optics), signals, carrier waves, and the like. Non-transitory media include magnetic media (e.g., disks and tapes), optical media (e.g., CD ROM, digital video disks, Blu-ray disks), solid state media (e.g., RAM, ROM, flash memory, solid-state storage), and other non-volatile storage or memory.

Computer device 905 can be used to implement techniques, methods, applications, processes, or computer-executable instructions in some example computing environments. Computer-executable instructions can be retrieved from transitory media, and stored on and retrieved from non-transitory media. The executable instructions can originate from one or more of any programming, scripting, and machine languages (e.g., C, C++, C#, Java, Visual Basic, Python, Perl, JavaScript, and others).

Processor(s) 910 can execute under any operating system (OS) (not shown), in a native or virtual environment. One or more applications can be deployed that include logic unit 960, application programming interface (API) unit 965, input unit 970, output unit 975, and inter-unit communication mechanism 995 for the different units to communicate with each other, with the OS, and with other applications (not shown). The described units and elements can be varied in design, function, configuration, or implementation and are not limited to the descriptions provided.

In some example implementations, when information or an execution instruction is received by API unit 965, it may be communicated to one or more other units (e.g., logic unit 960, input unit 970, output unit 975). In some instances, logic unit 960 may be configured to control the information flow among the units and direct the services provided by API unit 965, input unit 970, output unit 975, in some example implementations described above. For example, the flow of one or more processes or implementations may be controlled by logic unit 960 alone or in conjunction with API unit 965. The input unit 970 may be configured to obtain input for the calculations described in the example implementations, and the output unit 975 may be configured to provide output based on the calculations described in example implementations.

In an example implementation, processor(s) 910 can be configured to execute the flow as illustrated in FIG. 1 to a) initialize deep learning architecture parameters for a pre-defined base architecture through execution of the flow of 105 of FIG. 1; b) conduct model training based on the deep learning architecture parameters to generate a trained model through execution of the flow of 106 of FIG. 1; c) obtain predictions and uncertainties through iteratively applying Monte Carlo (MC) dropout to the generated trained model to evaluate the fitness function, wherein the fitness function is configured to evaluate accuracy and uncertainty of the predictions of the training model through execution of the flow of 107 and 108 of FIG. 1; d) for the fitness function indicative of the trained model not being optimized, update the deep learning architecture parameters and repeating the method from step b) through execution of the flow of 110 and reverting back to the flow of 105 of FIG. 1; and e) for the fitness function indicative of the trained model being optimized, provide the trained model for prediction through execution of the flow of 112 of FIG. 1. The processor(s) 910 can be configured to execute steps a) to e) in order in accordance with the flow of FIG. 1. The processor(s) 910 can thereby provide the trained model for prediction, wherein the trained model is executed to provide a prediction and an uncertainty level for a parameter based on received data as illustrated, for example, in FIG. 8(b) in an example implementation involving RUL.

Through execution of the flow steps a) to e) in the order described and as similarly illustrated in FIG. 1, the generated models are not only optimized to provide predictions of a desired parameter, but are also configured to provide an uncertainty level for the predictions, which is absent from the related art implementations. By executing the flow steps a) to e) in the order, models are trained for both prediction and uncertainty through the use of MC dropout, whereupon the converged solution based on the optimization of the fitness function yields a generated model that is optimized for both prediction and uncertainty. Such solutions can therefore provide an advantage over related art implementations that are optimized and configured to only provide predictions only, as the implementations involving the models generated from the flow steps of a) to e) can provide a confidence level for the predictions which can be utilized to determine the weight that the administrator should give to such predictions.

In an example implementation, the fitness function is configured to evaluate accuracy and uncertainty of the predictions of the training model through providing a probability of predicting a given output from an input, the deep learning architecture parameters, and a dropout rate, as described with respect to 107 of FIG. 1. As described in FIG. 1, the fitness function can be defined as

$$P(y|x,w,d) = \frac{1}{(\sqrt{2\pi})\sigma} \cdot e^{\frac{-1}{2} \cdot \frac{(y-\mu)^2}{\sigma^2}},$$ such that

$P(y|x,w,d)$ is the likelihood of predicting $y$ given input data $x$, network parameters $w$ and dropout rate $d$, wherein $x$ = input data; $w$ = network parameters (e.g., deep learning architecture parameters); $d$ = dropout rate; $\mu$ = mean of the prediction sampled using MC dropout mechanism; and $\sigma$ = deviation of the prediction sampled using the MC dropout mechanism. The fitness function is indicative of the model being optimized for when the deep learning architecture parameters converge within a threshold; wherein the fitness function is evaluated based on a mean of the predictions and the wherein the uncertainties calculated from comparing the mean of the predictions to the validation set of data.

As illustrated in FIG. 8(a), when the example computing device 905 is implemented as a management apparatus 802, the generated trained model can be configured to determine desired parameters of managed apparatuses, such as the remaining useful life (RUL) of an apparatus. In such an example implementation, the processor(s) 910 conduct model training based on the deep learning architecture parameters to generate the trained model through applying training data from a database configured to store historical data of the apparatus as illustrated at database 803, and the fitness function is configured to evaluate accuracy and uncertainty of the predictions of the training model based on the predictions and the uncertainties from evaluating the Monte Carlo (MC) dropout applied to the generated trained model against a validation set from the historical data stored in the database 803.

Some portions of the detailed description are presented in terms of algorithms and symbolic representations of operations within a computer. These algorithmic descriptions and symbolic representations are the means used by those skilled in the data processing arts to convey the essence of their innovations to others skilled in the art. An algorithm is a series of defined steps leading to a desired end state or result. In example implementations, the steps carried out require physical manipulations of tangible quantities for achieving a tangible result.

Unless specifically stated otherwise, as apparent from the discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

Example implementations may also relate to an apparatus for performing the operations herein. This apparatus may be specially constructed for the required purposes, or it may include one or more general-purpose computers selectively activated or reconfigured by one or more computer programs. Such computer programs may be stored in a computer readable medium, such as a computer-readable storage medium or a computer-readable signal medium. A computer-readable storage medium may involve tangible mediums such as, but not limited to optical disks, magnetic disks, read-only memories, random access memories, solid state devices and drives, or any other types of tangible or non-transitory media suitable for storing electronic information. A computer readable signal medium may include mediums such as carrier waves. The algorithms and displays presented herein are not inherently related to any particular computer or other apparatus. Computer programs can involve pure software implementations that involve instructions that perform the operations of the desired implementation.

Various general-purpose systems may be used with programs and modules in accordance with the examples herein, or it may prove convenient to construct a more specialized apparatus to perform desired method steps. In addition, the example implementations are not described with reference to any particular programming language. It will be appreciated that a variety of programming languages may be used to implement the teachings of the example implementations as described herein. The instructions of the programming language(s) may be executed by one or more processing devices, e.g., central processing units (CPUs), graphics processing units (GPUs), processors, or controllers.

As is known in the art, the operations described above can be performed by hardware, software, or some combination of software and hardware. Various aspects of the example implementations may be implemented using circuits and logic devices (hardware), while other aspects may be implemented using instructions stored on a machine-readable medium (software), which if executed by a processor, would cause the processor to perform a method to carry out implementations of the present application. Further, some example implementations of the present application may be performed solely in hardware, whereas other example implementations may be performed solely in software. Moreover, the various functions described can be performed in a single unit, or can be spread across a number of components in any number of ways. When performed by software, the methods may be executed by a processor, such as a general purpose computer, based on instructions stored on a computer-readable medium. If desired, the instructions can be stored on the medium in a compressed and/or encrypted format.

Moreover, other implementations of the present application will be apparent to those skilled in the art from consideration of the specification and practice of the teachings of the present application. Various aspects and/or components of the described example implementations may be used singly or in any combination. It is intended that the specification and example implementations be considered as examples only, with the true scope and spirit of the present application being indicated by the following claims.

**Claims**

1. A method, comprising:

   a) initializing deep learning architecture parameters for a pre-defined base architecture;
   b) conducting model training based on the deep learning architecture parameters to generate a trained model;
   c) obtaining predictions and uncertainties through iteratively applying Monte Carlo (MC) dropout to the generated trained model to evaluate the fitness function, wherein the fitness function is configured to evaluate accuracy and uncertainty of the predictions of the training model;
   d) for the fitness function indicative of the trained model not being optimized, updating the deep learning architecture parameters and repeating the method from step b); and
   e) for the fitness function indicative of the trained model being optimized, providing the trained model for prediction.

2. The method of claim 1, wherein the fitness function is configured to evaluate accuracy and uncertainty of the predictions of the training model through providing a probability of predicting a given output from an input, the deep learning architecture parameters, and a dropout rate.

3. The method of claim 1, wherein the fitness function is indicative of the model being optimized for when the deep learning architecture parameters converge within a threshold;
   wherein the fitness function is evaluated based on comparing a mean of Monte Carlo predictions and the estimated uncertainties to an actual validation set of data.

4. The method of claim 1, wherein the generated trained model is configured to determine remaining useful life (RUL) of an apparatus;
   wherein the conducting model training based on the deep learning architecture parameters to generate the trained model comprises applying training data from a database configured to store historical data of the apparatus;
   wherein the fitness function is configured to evaluate accuracy and uncertainty of the predictions of the training model based on the predictions and the uncertainties from evaluating the Monte Carlo (MC) dropout applied to the generated trained model against a validation set from the historical data stored in the database.

5. The method of claim 1, wherein the fitness function is defined as $P(y|x,w,d) = \frac{1}{(\sqrt{2\pi})\sigma} \cdot e^{-\frac{1}{2} \cdot \frac{(y-\mu)^2}{\sigma^2}}$, such that $P(y|x,w,d)$ is the likelihood of predicting $y$ given input data $x$, network parameters w and dropout rate d, wherein

   $x$ = input data;
   $w$ = network parameters;
   $d$ = dropout rate;
   $\mu$ = mean of the prediction sampled using MC dropout mechanism; and
   $\sigma$ = deviation of the prediction sampled using MC dropout mechanism.

6. The method of claim 1, wherein the providing the trained model for prediction comprises executing the trained model to provide a prediction and an uncertainty level for a parameter based on received data.

7. A non-transitory computer readable medium, storing instructions for executing a process, the instructions comprising:

   a) initializing deep learning architecture parameters for a pre-defined base architecture;
   b) conducting model training based on the deep learning architecture parameters to generate a trained model;
   c) obtaining predictions and uncertainties through iteratively applying Monte Carlo (MC) dropout to the generated trained model to evaluate the fitness function, wherein the fitness function is configured to evaluate accuracy and uncertainty of the predictions of the training model;
   d) for the fitness function indicative of the trained model not being optimized, updating the deep learning architecture parameters and repeating the instructions from step b); and
   e) for the fitness function indicative of the trained model being optimized, providing the trained model for prediction.

8. The non-transitory computer readable medium of claim 7, wherein the fitness function is configured to evaluate accuracy and uncertainty of the predictions of the training model through providing a probability of predicting a given output from an input, the deep learning architecture parameters, and a dropout rate.

9. The non-transitory computer readable medium of claim 7, wherein the fitness function is indicative of the model being optimized for when the deep learning architecture parameters converge within a threshold;
wherein the fitness function is evaluated based on comparing a mean of Monte Carlo predictions and the estimated uncertainties to an actual validation set of data..

10. The non-transitory computer readable medium of claim 7, wherein the generated trained model is configured to determine remaining useful life (RUL) of an apparatus;
wherein the conducting model training based on the deep learning architecture parameters to generate the trained model comprises applying training data from a database configured to store historical data of the apparatus;
wherein the fitness function is configured to evaluate accuracy and uncertainty of the predictions of the training model based on the predictions and the uncertainties from evaluating the Monte Carlo (MC) dropout applied to the generated trained model against a validation set from the historical data stored in the database.

11. The non-transitory computer readable medium of claim 7, wherein the fitness function is defined as

$$P(y|x,w,d) = \frac{1}{(\sqrt{2\pi})\sigma} \cdot e^{\frac{-1}{2} \cdot \frac{(y-\mu)^2}{\sigma^2}} \text{ , such}$$

that $P(y|x,w,d)$ is the likelihood of predicting $y$ given input data $x$, network parameters $w$ and dropout rate $d$, wherein

 $x$ = input data;
 $w$ = network parameters;
 $d$ = dropout rate;
 $\mu$ = mean of the prediction sampled using MC dropout mechanism; and
 $\sigma$ = deviation of the prediction sampled using MC dropout mechanism.

12. The non-transitory computer readable medium of claim 7, wherein the providing the trained model for prediction comprises executing the trained model to provide a prediction and an uncertainty level for a parameter based on received data.

13. An apparatus, comprising:

 a processor, configured to:

  a) initialize deep learning architecture parameters for a pre-defined base architecture;
  b) conduct model training based on the deep learning architecture parameters to generate a trained model;
  c) obtain predictions and uncertainties through iteratively applying Monte Carlo (MC) dropout to the generated trained model to evaluate the fitness function, wherein the fitness function is configured to evaluate accuracy and uncertainty of the predictions of the training model;
  d) for the fitness function indicative of the trained model not being optimized, update the deep learning architecture parameters and repeat the process from step b); and
  e) for the fitness function indicative of the trained model being optimized, provide the trained model for prediction.

14. The apparatus of claim 13, wherein the fitness function is configured to evaluate accuracy and uncertainty of the predictions of the training model through providing a probability of predicting a given output from an input, the deep learning architecture parameters, and a dropout rate.

15. The apparatus of claim 13, wherein the fitness function is indicative of the model being optimized for when the deep learning architecture parameters converge within a threshold;
wherein the fitness function is evaluated based on comparing a mean of Monte Carlo predictions and the estimated uncertainties to an actual validation set of data..

16. The apparatus of claim 13, wherein the generated trained model is configured to determine remaining useful life (RUL) of an apparatus;
wherein the processor is configured to conduct model training based on the deep learning architecture parameters to generate the trained model by applying training data from a database configured to store historical data of the apparatus;
wherein the fitness function is configured to evaluate accuracy and uncertainty of the predictions of the training model based on the predictions and the uncertainties from evaluating the Monte Carlo (MC) dropout applied to the generated trained model against a validation set from the historical data stored in the database.

17. The apparatus of claim 13, wherein the fitness function is defined as $P(y|x,w,d)$ =

$$\frac{1}{(\sqrt{2\pi})\sigma} \cdot e^{\frac{-1}{2} \cdot \frac{(y-\mu)^2}{\sigma^2}} \text{ , such that } P(y|x,w,d) \text{ is the}$$

likelihood of predicting $y$ given input data $x$, network parameters w and dropout rate d, wherein

*x* = input data;

*w* = network parameters;

*d* = dropout rate;

$\mu$ = mean of the prediction sampled using MC dropout mechanism; and

$\sigma$ = deviation of the prediction sampled using MC dropout mechanism.

18. The apparatus of claim 13, wherein the processor is configured to provide the trained model for prediction through execution of the trained model to provide a prediction and an uncertainty level for a parameter based on received data.

START

Prepare data 101

Define Training and Validation set 102

User defined base architecture stack-up 103

Start optimization algorithm 104

Initialize deep learning architecture parameters 105

Train model 106

Update deep learning architecture parameters 110

No

Obtain prediction and uncertainty using Monte Carlo Dropout 107

Fitness function optimized? 109

Yes

Evaluate fitness function 108

End optimization algorithm 111

Optimized model for prediction and uncertainty 112

STOP

Training Data

Validation Data

Step 1

Step 2

Step 3

FIG. 1

FIG. 2

FIG. 3

FIG. 4

FIG. 5

| Parameter | Initialized Parameter Value |
|---|---|
| Number of LSTM Layers | 1 |
| Number of LSTM Nodes in Layer 1 | 4 |
| Number of NN Layers | 1 |
| Number of NN Nodes in Layer 1 | 2 |
| LSTM input dropout | 0.5 |
| LSTM output dropout | 0.5 |
| NN dropout | 0.5 |

FIG. 6

| Parameter | Initialized Parameter Value |
|---|---|
| Number of LSTM Layers | 2 |
| Number of LSTM Nodes in Layer 1 | 32 |
| Number of LSTM Nodes in Layer 2 | 64 |
| Number of NN Layers | 2 |
| Number of NN Nodes in Layer 1 | 8 |
| Number of NN Nodes in Layer 2 | 8 |
| LSTM input dropout in Layer 1 | 0.1 |
| LSTM output dropout in Layer 1 | 0.1 |
| LSTM input dropout in Layer 2 | 0.1 |
| LSTM output dropout in Layer 2 | 0.1 |
| NN dropout in Layer 1 | 0.2 |
| NN dropout in Layer 2 | 0.2 |

FIG. 7

801-1

801-1

801-3

801-4

Network
800

802

Database
803

FIG. 8(a)

| Apparatus | RUL Prediction | RUL Uncertainty level |
|-----------|----------------|------------------------|
| A1 | T1 | U1 |
| A2 | T2 | U2 |
| A3 | T3 | U3 |
| A4 | T4 | U4 |
| ... | ... | ... |

FIG. 8(b)

*900*

INPUT/USER
INTERFACE
*935*

OUTPUT
DEVICE/
INTERFACE
*940*

EXTERNAL
STORAGE
*945*

NETWORK
*950*

COMPUTING
DEVICE
*905*

I/O
INTERFACE
*925*

INTERNAL
STORAGE
*920*

MEMORY
*915*

*930*

PROCESSOR(S)  *910*

LOGIC UNIT
*960*

API UNIT
*965*

INPUT UNIT
*970*

OUTPUT UNIT
*975*

*995*

FIG. 9

Europäisches
Patentamt

European
Patent Office

Office européen
des brevets

# EUROPEAN SEARCH REPORT

Application Number

EP 18 15 7364

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 781 982 B1 (DAS SREERUPA [US] ET AL) 15 July 2014 (2014-07-15) <br> * abstract * <br> * column 7, line 23 - line 42 * <br> * figures 1A, 2A * | 1-18 | INV. <br> G06N3/04 <br> G06N3/08 <br> G05B23/02 |
| A | KENDALL ALEX ET AL: "Modelling uncertainty in deep learning for camera relocalization", <br> 2016 IEEE INTERNATIONAL CONFERENCE ON ROBOTICS AND AUTOMATION (ICRA), IEEE, <br> 16 May 2016 (2016-05-16), pages 4762-4769, XP032908749, <br> DOI: 10.1109/ICRA.2016.7487679 <br> [retrieved on 2016-06-08] <br> * abstract * <br> * page 4764, left-hand column, line 1 - right-hand column, line 31 * | 1-18 | |
| A | US 2008/208487 A1 (GOEBEL KAI FRANK [US] ET AL) 28 August 2008 (2008-08-28) <br> * abstract * <br> * paragraph [0052] * <br> * figure 8 * | 1-18 | TECHNICAL FIELDS SEARCHED (IPC) <br><br> G06N <br> G05B |
| A | Yarin Gal ET AL: "Dropout as a Bayesian Approximation: Representing Model Uncertainty in Deep Learning", <br><br> 4 October 2016 (2016-10-04), XP055467519, <br> Retrieved from the Internet: <br> URL:https://arxiv.org/pdf/1506.02142.pdf <br> [retrieved on 2018-04-16] <br> * abstract * <br> * page DESC 1, left-hand column, line 31 - page DESC 3, right-hand column, line 32 * | 1-18 | |

The present search report has been drawn up for all claims

| Place of search | Date of completion of the search | Examiner |
|---|---|---|
| The Hague | 27 September 2018 | Mandato, Davide |

EPO FORM 1503 03.82 (P04C01)

**EP 3 407 267 A1**

## ANNEX TO THE EUROPEAN SEARCH REPORT
## ON EUROPEAN PATENT APPLICATION NO.

EP 18 15 7364

27-09-2018

| Patent document cited in search report | | Publication date | Patent family member(s) | Publication date |
|---|---|---|---|---|
| US 8781982 | B1 | 15-07-2014 | NONE | |
| US 2008208487 | A1 | 28-08-2008 | NONE | |

EPO FORM P0459

For more details about this annex : see Official Journal of the European Patent Office, No. 12/82